Europäisches Patentamt

**European Patent Office**

Office européen des brevets

(19)

(11) Publication number: **0 207 878**
A2

(12) **EUROPEAN PATENT APPLICATION**

(21) Application number: **86630107.0**

(22) Date of filing: **20.06.86**

(51) Int. Cl.⁴: **B 60 C 9/26**

(30) Priority: **22.06.85 GB 8515875**

(43) Date of publication of application:
**07.01.87 Bulletin 87/2**

(84) Designated Contracting States:
**DE FR GB IT**

(71) Applicant: **W & A Bates Limited**
**Livery House 169 Edmund Street**
**Birmingham B3 2JB(GB)**

(72) Inventor: **Holroyd, Eric**
**10 Arley End High Legh Park**
**near Knutsford Cheshire(GB)**

(72) Inventor: **Sumner, Anthony James Morgan**
**25 Astor Road Streatly**
**Sutton Coldfield West Milands B74 3EY(GB)**

(54) **Pneumatic tyres.**

(57) This invention relates to pneumatic tyres having the tread portion (11) reinforced by a breaker (17) comprising two belts (18) and (19). Each belt is reinforced by a single continuous cord (21) formed into a chevron pattern, preferably 'v' shaped by extending back and forth across the belt (18) or (19) with loops (22) at the belt edges (25) (26). The chevron configuration in one belt (18) pointing in the opposite direction to the chevron configuration in the other belt (19).

Fig .1.

EP 0 207 878 A2

## PNEUMATIC TYRES

This invention relates to pneumatic tyres and in particular to radial carcass tyres for use on motor vehicles.

Radial tyres typically have a tread reinforcing breaker comprising one or more elastomeric plies reinforced by parallel cords extending across the width of the breaker usually with the cords at an acute angle to the circumferentially extending centre line of the tyre. The edges of the breaker plies are usually formed by cut ends which cause a high stress point leading to tyre failure from breaker edge looseness.

One solution to the aforementioned problem is described in U.K. patent specification no. 2 084 623B in which a single continuous tyre cord is used to form the tyre breaker fabric by extending back and forth across the sheet so that the edges of the sheet are formed by folded cord edges rather than cut ends. The preferred embodiment is a single ply of zig-zag cord configuration although a single ply of chevron cord configuration is also disclosed.

We have now found that a two belt non-interlocking breaker construction, each ply consisting of adjacent cord portions in the same plane and having chevron cord configuration but the plies being assembled with the direction of the v-shapes reversed, gives surpisingly good properties when incorporated in a pneumatic tyre construction. Significantly it is possible by means of the present invention to achieve a breaker construction which can vary the angle effect and may moreover achieve a zero angle effect.

According to this invention there is provided a pneumatic tyre having a tread portion reinforced by a breaker including two belts each of which comprises an elastomeric ply reinforced by a single continuous cord formed into a chevron pattern by extending back and forth from one axial edge of the respective belt to the other axial edge of said belt so that each traverse of the cord forms a chevron configuration having on one side of the axial centreline of the belt a first portion making a first bias angle with said centreline, and on the other axial side of the centreline a second portion making a second and opposite bias angle with the centreline of the belt, and the cord is folded at each edge of the belt so that at each edge of the belt there are located loops of cord,  the chevron configuration of one of the belts pointing in the opposite direction to the chevron configuration of the other of said belts.

Preferably the chevron configuration are both substantially 'v' shaped configurations, with the point of the 'v' being preferably located at the centreline of each belt.

Preferably the first bias angle of each traverse of the cord is equal to the second bias angle.

The number of plies used in a breaker construction will depend on the purpose of the tyre e.g. usually two plies for a car or motor cycle tyre and two or more alternating plies for a truck, earthmover or aircraft tyre. Typical breaker cord is a cord of a high modulus material having a modulus of 5000 to 21000 $kg/mm^2$ e.g. steel, rayon, glass fibre or aromatic polyamide (as typified by Kevlar which is a registered Trade Mark).

The cord may have a twist angle which does not exceed $18^o$.

Further aspects of the invention will be apparent from the following description which illustrates preferred embodiments by way of example only with reference to the accompanying drawings in which:

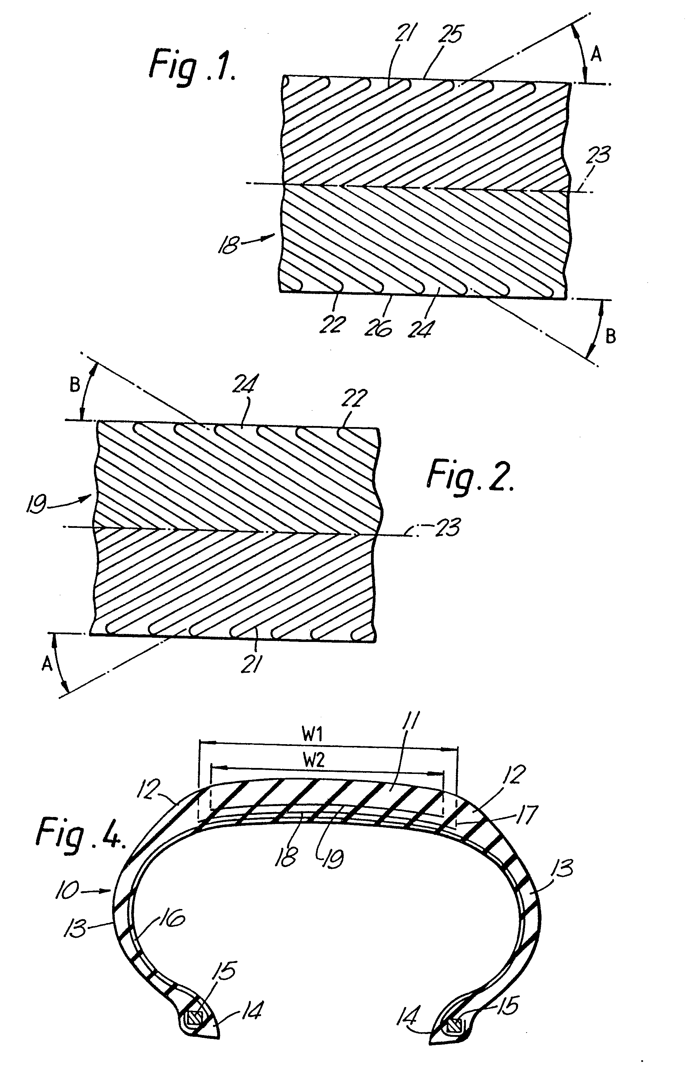

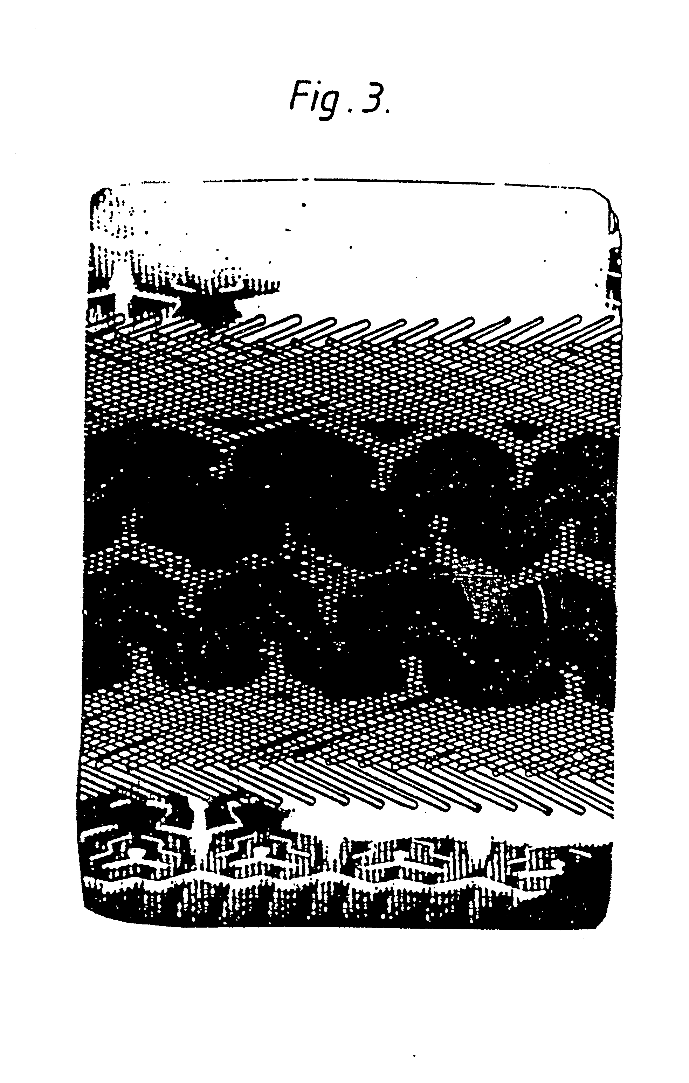

FIGURE 1 is a plan view of a short length of tyre breaker fabric for one ply of the breaker package according to the present invention,

FIGURE II is a plan view of a short length of tyre
breaker fabric identical to that of
Figure I but reversed i.e. rotated by 180°
in the plane of the paper,

FIGURE III is an x-ray photograph of part of a
tyre tread with a breaker according to
the present invention,

FIGURE IV is a cross-section of part of a tyre
incorporating a breaker according to the
present invention.

With reference to FIG IV, there is illustrated a radial
carcass tyre 10 intended for use on a passenger car. By
radial carcass tyre is meant a tyre the carcass of which is
reinforced by cords which make a bias angle of between
70° and 90° to the direction of rotation of the tyre.

The tyre 10 has a tread portion 11 having shoulder portions
12 on each axial side thereof. Sidewalls 13 extend radially
inwardly from the shoulders 12 and terminate in bead portions
14 which are each reinforced by an annular bead 15. The tyre
is reinforced by an annular carcass ply 16 which extends
from one bead 15 to the other bead 15 through the sidewalls
13 and under the tread portion 11. The tread portion 11 is
further reinforced in the crown area of the tyre by a
breaker 17 comprising a pair of annular breaker belts 18 and
19. The breaker belts 18 and 19 each comprise an
elastomeric ply reinforced by cord having the rubber coated
on both sides thereof. The cord may be of any suitable
construction known in the trade, for example, the cord may be
steel tyre cord of four filaments of 0.25 mm diameter twisted
with an open twist to a cord diameter of 0.65 mm. However,
the cord could be produced from other suitable materials
such as nylon, aromatic polyamide, glass-fibre, or rayon,
and have a plurality of filaments the number of which are
determined by the strength requirements of the cord.

The inner breaker belt 18, adjacent the carcass ply, may have a width W1 such that it extends axially beyond each edge of the radially outer belt 19 of width W2. The width W1 of the inner belt is preferably about 10% greater than the width W2 of the inner belt. However, other types of well known breaker construction could be utilised for example the belts could have the same widths W1 and W2, or the top belt could extend axially beyond the inner belt.

The two breaker belts 18 and 19 are illustrated in FIG I and FIG II respectively. Each breaker 18 or 19 is reinforced by a single continuous cord 21 extending back and forth across the belt in a general v-shape to form a chevron pattern and being folded at each edge on itself so that the longitudinal edges 25 and 26 of the belt have a series of looped cord edges 22. Although the v-shapes in the drawings are shown with a point, in practice this is not the case and the cord curves round rather like a hairpin. Adjacent portions of the cord are spaced apart by a distance of between 0.2 and 1.2 times the diameter of the cord and preferably by a distance approximately equal to the diameter of the cord, in this case by a distance of about 0.6 mm, the cord diameter being 0.65 mm. The portions of the cord extend across the belt at an angle of about $20^{\circ}$ each side of the longitudinal centre line 23 thereof, one half of each portion extending at a bias angle A of $+20^{\circ}$ and the other half extending at an opposite bias angle B of $-20^{\circ}$. These cord angles apply to the "unstretched" breaker construction before it is assembled in a tyre. Assembly in a tyre usually results in a slight (e.g. 10%) reduction in cord angle. The cord 1 is held in its assembled configuration by means of unvulcanised rubber compound 4 which is pressed into at least one side of the assembly, and preferably both sides, by a pair of rollers in the same way as with conventional tyre cord fabric. The width of the inner breaker 18 of Figure I is 118 mm and the width of the outer breaker 19 of Figure II is 110 mm.

Whilst the belts 18 and 19 have been described with the cord having symmetrical portions extending across the belt at angles A and B of $\pm 20^{0}$, other suitable angles could be utilised, for example where A and B equal an angle of between $\pm 15^{0}$ to $\pm 30^{0}$.

The breaker 17 is close to the width required for tyre building, the cord bias angle is substantially that required, virtually no cut cord ends exist at the longitudinal fabric edges and yet the package with its non-interlocking plies has a substantially uniform thickness which provides further freedom in tyre design and building methods. Theoretically there will be two cut ends but these may be joined at the start and finish of each ply.

A tyre as previously described having a chevron cord configuration with bias angles A and B of $\pm 20^{0}$, and belts 18 and 19 of 118 mm and 110 mm was built and tested in comparison with two tyres outside the scope of the present invention. The first of said two tyres having only one ply of the continuous cord chevron pattern as proposed in U.K. patent specification no. 2 084 623B, and the second of the two tyres having two plies, each ply using a single continuous cord but in a zig-zag configuration with a single bias angle of 20$^{0}$. The results are as follows:

a) Inflation
The single chevron breaker tyre (1) expanded considerably more than tyre (2) in the crown with a lower tread radius even at low pressures. The double chevron breaker tyre of our invention was very similar to the tyre (2) in inflation characteristics with an inflated circumference within 0.2% and no measurable difference in the inflated tread radius.
b) Load deflection
The load deflection curves were almost exactly the same for the two double breaker tyres. There was no obvious difference in the footprints except perhaps a slightly more even pressure across the contact patch with the double chevron breaker tyre.
c) Cornering force
1. The cornering stiffness and aligning stiffness versus load characteristic shows a 15% higher stiffness for the double chevron breaker tyre compared with the double zig-zag breaker tyre, a quality of tyres with improved handling performance.

2.   The lateral force versus slip angle for the double chevron breaker tyre at various loads shows the unusual characteristic of zero angle effect.  This result would have been expected for a symmetrical breaker construction as exemplified by the breaker  package of our invention. Both cornering force characteristics were substantially better for the single and double chevron breaker tyre than for the conventional cut edge breaker tyre.

The results of these tests show the surprising and novel combination of zero angle effect with characteristics expected to give a tyre with improved handling but no undesirable features.

The breaker belt 19 immediately below the tread has a considerable influence on the angle effect. By having the radially outer breaker 19 of symmetrical construction as described above, this is reduced to a zero effect.  However it is envisaged that by offsetting the point of the chevron so that the 'v' shape is no longer symmetrical it will be possible, to manufacture tyres to a desired angle effect.

It is considered that this effect may also be achieved by varying the bias angle of the portion of each traverse of the cord on each side of the centreline of the belt, for example the first portion of the traverse could make a bias angle of $15^{o}$ and the second portion of the traverse make a bias angle of $22^{o}$.

By angle effect is meant the mean of a forward and reverse force variation which manifests itself in the tendency of a vehicle to crab.

CLAIMS

1. A pneumatic tyre (10) having a tread portion (11) reinforced by a breaker (17) having an elastomeric ply (18) or (19) reinforced by a single continuous cord (21) formed into a chevron pattern by extending back and forth from one axial edge (25) of the belt to the other axial edge (26) of the belt so that each traverse of the cord forms a chevron configuration having on one side of the centreline (23) of the belt a first portion making a first bias angle (A) with said centreline, and on the other axial side of the centreline a second portion making a second and opposite bias angle (B) with the centreline of the belt and the cord is folded at each edge (25 and 26) of the belt so that at each edge of the belt there are located a series of folded loops of cord, characterised in that the breaker (17) comprises two belts (18) and (19) and the chevron configuration of one of said belts points the opposite direction to the chevron configuration of the other of said belts.

2. A pneumatic tyre as claimed in Flaim 1 characterised in that each belt (18) or (19) is an elastomeric ply (24) reinforced by a single continuous cord (21) formed into a substantially 'v' shaped chevron pattern by extending back and forth from one axial edge of the belt to the other axial edges of the belt.

3. A tyre as claimed in Claim 2 characterised in that at least the radially outer belt (19) of said breaker (17) is formed so that the point of the 'v' configuration is located at the longitudinal centreline (23) of the belt.

4. A tyre according to Claim 3 characterised in that both belts (18) and (19) of said breaker (17) have the point of the 'v' configuration located at the centreline.

5. A tyre as claimed in any one of Claims 1 to 4 characterised in that at least the radially outer belt (19) is formed with a chevron configuration in which said first portion of each traverse make a bias angle (A) with the centreline (23) of the belt that is equal to the opposite bias angle (B) of the second portion of the traverse.

6. A tyre as claimed in Claim 5 characterised in that both belts (18) and (19) of the breaker (17) are formed with the first and second portions of each traverse making equal and oppositely biased angles with the centreline.

7. A tyre according to any one of Claims 1 to 6 characterised in that the portions of the cord in one traverse are spaced from the cords of the adjacent portions in the next traverse by between 0.2 and 1.2 times the diameter of the cord.

8. A tyre according to any one of Claims 5, 6 or 7 characterised in that the first and second portions of each traverse of the cord make a respective bias angle (A) or (B) of approximately $20^{\circ}$ on each side of the longitudinal centreline of the belt.

9. A tyre as claimed in any one of the preceding claims characterised in that the radially outer belt (19) of the breaker (17) has an axial width W2 which is less than the width W1 of the inner belt (18).

10. A tyre as claimed in any of the preceding claims characterised in that the breaker (17) comprises at least three belts; and in which the chevron configuration of any one belt point in the opposite direction to the chevron configurations of any adjacent belt.

Fig .1.

Fig. 2.

Fig .4.

## Fig. 3.